# EUROPEAN PATENT APPLICATION

(11) **EP 1 365 174 A1**
(43) Date of publication of application: **26.11.2003**
(21) Application number: 01974755.9
(22) Date of filing: 10.10.2001
(51) Int. Cl.: F16H 53/02

(54) **CAM ASSEMBLY AND CAM POSITIONING DEVICE**

(30) Priority: 28.12.2000 JP 2000402449
(71) Applicant: Honda Giken Kogyo Kabushiki Kaisha, Minato-ku, Tokyo 107-8556 (JP); Hirata Technical Co., Ltd, Tokyo 121-8540 (JP)
(72) Inventor: OGASAWARA, Atsushi, Wako-shi, Saitama 351-0113 (JP); YUUKI, Masao, Maebasi-shi, Gunma 379-2154 (JP); MANIWA, Shigeru, Maebashi-shi, Gunma 379-2154 (JP); HAYAKAWA, Shohei, Hanno-si, Saitama 357-0041 (JP)
(74) Representative: Prechtel, Jörg, Dipl.-Phys. Dr.
(86) International application number: JP0108880
(87) International publication number: WO02053951

(57) **Abstract**

A positioning apparatus for positioning two plate cams of a cam assembly made of metal which is used for on/off control of a valve of an internal combustion engine or the like in a state where attaching phases are deviated. A cam positioning apparatus has: first cam positioning tool 24 which forms a positioning hole 31 having almost the same shape as an outer shape of a first plate cam 10; and a second cam positioning tool 25 which forms a positioning hole 31 having almost the same shape as an outer shape of a second plate cam 11. The cam positioning tools 24 and 25 arrange the positioning holes to relative positions which are deviated by an angle α according to a predetermined phase difference between both plate cams and fix them onto a positioning base plate 26. Upon assembling of the cam assembly, by fitting both plate cams into the positioning holes and inserting a cam shaft 12 into shaft through-holes by pressure, both plate cams are assembled onto the cam shaft at the relative positions which are away in the circumferential direction by the angle α according to the phase difference.

## Description

### Technical Field

The invention relates to a technique regarding a cam made of metal and, more particularly, to a cam assembly which is constructed by coaxially assembling two plate cams in a state where attaching phases are deviated in the circumferential direction of a cam shaft by a predetermined angle and is suitable for use in on/off (opening/closure) control or the like of, for example, an exhaust valve or an intake valve of an internal combustion engine and to a cam positioning apparatus which is used for positioning plate cams provided for such a cam assembly.

### Background Art

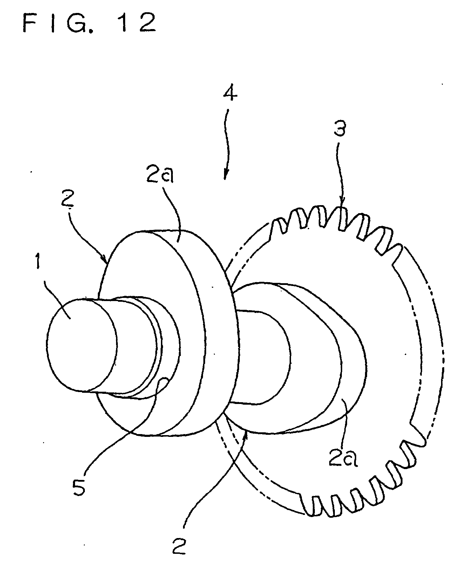

Hitherto, as shown in Fig. 12, a cam assembly 4 made of metal and formed by assembling two plate cams 2 and a gear 3 onto a cam shaft 1 is generally used as rotating means in an internal combustion engine of, for example, a motorcycle or the like. The cam assembly 4 which is used in the internal combustion engine as mentioned above is constructed in a manner such that the plate cams 2 whose outlines are formed in an arc-cam-shape are coaxially assembled in a state where attaching phases are deviated in the circumferential direction of the cam shaft 1 by a predetermined angle.

In case of assembling such a cam assembly 4, for example, the plate cams 2 formed by punching work and the gear 3 are positioned and held while aligning their shaft through-holes 5, particularly, the plate cams 2 are positioned while deviating the attaching phases in the circumferential direction of the cam shaft by the predetermined angle, and the cam shaft 1 is inserted into the common shaft through-holes 5 by pressure, thereby assembling.

When such a cam assembly is used in the internal combustion engine, although not shown, a timing gear on a crank shaft which is rotated synchronously with an engine cycle is come into engagement with the gear 3, thereby rotating the cam shaft 1 and rotating the plate cams 2 in accordance with the rotation of the cam shaft 1. An on/off control of an exhaust valve or an intake valve corresponding to them is performed.

However, hitherto, upon assembling of such a cam shaft 4, when the plate cams 2 are positioned onto the cam shaft 1 in a state where the attaching phases are deviated by the predetermined angle, a positional deviation is likely to occur in the plate cams 2 and a predetermined phase difference between the cams is not obtained. If the cam shaft 1 is inserted by pressure in a state where they are deviated, assembling precision of the plate cams 2 to the cam shaft 1 deteriorates. Thus, when the cam operates, abutting states of cam surfaces 2a to a follower such as a valve or the like are not aligned or contact positions are deviated, so that working precision deteriorates and it is difficult to improve durability of the cam.

It is an object of the invention to solve the conventional problems as mentioned above, position and hold two plate cams of different phases at a predetermined phase difference without deviation upon assembling of a cam assembly, and improve assembling precision of the plate cams to a cam shaft.

### Disclosure of Invention

To accomplish the above object, the invention is constructed as follows. That is, the invention is characterized by a cam positioning apparatus for positioning and holding first and second plate cams and made of metal while deviating attaching phases in a circumferential direction of a cam shaft by a predetermined angle when a cam assembly is assembled by inserting the cam shaft by pressure into shaft through-holes formed in the first and second plate cams, comprising: a first cam positioning tool which forms a positioning hole that has almost the same shape as an outer shape of the first plate cam and in that a seating surface of the plate cam is formed on a bottom portion and, when the first plate cam is positioned and held, fits the plate cam into the positioning hole, and puts the plate cam onto the seating surface; a second cam positioning tool which forms a positioning hole that has almost the same shape as an outer shape of the second plate cam and in that a seating surface of the plate cam is formed on a bottom portion and, when the second plate cam is positioned and held, fits the plate cam into the positioning hole, and puts the plate cam onto the seating surface; and a positioning base plate which arranges the positioning holes to relative positions which are deviated by the predetermined angle in accordance with a phase difference between the plate cams and, thereby fixing the first and second positioning tools.

Therefore, according to the invention, upon assembling of the cam assembly, when the first and second plate cams are fitted into the positioning holes with the predetermined phase difference and the cam shaft is inserted into the shaft through-holes by pressure, respectively, both of the plate cams are assembled at predetermined attaching positions on the cam shaft which are away in the circumferential direction by the predetermined angle corresponding to the phase difference. Consequently, according to the invention, the first and second plate cams can be positioned and held onto the cam shaft with the predetermined phase difference without a deviation. Thus, assembling precision of both of the plate cams to the cam shaft can be remarkably improved. Therefore, when the cam operates, a situation such that the abutting states of the cam surfaces to the follower such as a valve or the like become uneven or the contact positions are deviated can be eliminated. Operational precision can be improved. Durability of the cams can be improved.

The cam positioning apparatus of the invention is characterized by comprising: vacuum devices which suck air existing in spaces between the positioning holes and the plate cams fitted therein from lower portions of the seating surfaces through air passages, respectively; and vacuum degree detecting apparatuses which detect vacuum degrees in the spaces between the positioning holes and the plate cams and confirm adhesion degrees of the plate cams to the seating surfaces from the detected vacuum degrees, respectively. Therefore, when the first and second plate cams are positioned and held, as mentioned above, they are fitted into the positioning holes of the positioning tools and put onto the seating surfaces of the positioning holes, respectively. The space between the plate cam and the positioning tool is vacuum-sucked in the positioning hole. The adhesion degree of the plate cam to the seating surface is checked from the vacuum degree which is obtained at this time. Thus, the occurrence of the positional deviation such as inclination of the plate cam or the like can be prevented and the plate cam can be more certainly positioned.

Subsequently, the invention is constructed as follows and can accomplish the above object. That is, the invention is characterized by a cam assembly formed by inserting a cam shaft by pressure into shaft through-holes formed in first and second plate cams made of metal and coaxially assembling the first and second plate cams while deviating attaching phases in a circumferential direction of the cam shaft by a predetermined angle, wherein: a convex portion is formed on one of plate surfaces of each of the first and second plate cams and a concave portion is formed on the other plate surface at a position corresponding to the back side of the convex portion; the concave and convex portions are formed on one of the plate cams, for example, the first plate cam at positions which are away from attaching positions of the convex and concave portions of the other plate cam, for example, the second plate cam by an angle corresponding to the phase difference; and both of the plate cams are coupled and integrated by fitting the concave portion and the convex portion. Therefore, according to the invention, when the first and second plate cams are coupled by fitting the concave portion and, the convex portion, both of the plate cams are preliminarily positioned at predetermined relative positions which are away by the angle corresponding to the predetermined phase difference and integrated. Consequently, when the cam shaft is inserted by pressure into the shaft through-hole and the cam assembly is assembled, the first and second plate cams can be positioned and held onto the cam shaft with the predetermined phase difference without a deviation, so that the assembling precision of the plate cams to the cam shaft can be fairly improved. Thus, when the cam operates, a situation such that the abutting states of the cam surfaces to the follower such as a valve or the like become uneven or the contact positions are deviated can be eliminated. Operational precision can be improved. Durability of the cams can be improved.

Subsequently, the invention is constructed as follows and the above object can be accomplished. That is the invention is characterized by a cam assembly formed by inserting a cam shaft by pressure into shaft through-holes formed in first and second plate cams made of metal and coaxially assembling the first and second plate cams while deviating attaching phases in a circumferential direction of the cam shaft by a predetermined angle, wherein: the cam assembly has a coupling plate which couples the first and second plate cams; a convex portion is formed on one of plate surfaces of each of the first and second plate cams and a concave portion is formed on the other plate surface at a position corresponding to the back side of the convex portion; a convex portion and concave portions which are fitted into/onto the concave and convex portions of both of the plate cams are formed on the coupling plate at relative positions which are away by an angle corresponding to a phase difference α of both of the plate cams, respectively; and both of the plate cams are laminated and integrated by fitting the concave and convex portions through the coupling plate.

Therefore, according to the invention, on one of the plate surfaces of the coupling plate, the first plate cam is laminated by fitting the convex portion and the concave portion, and on the other plate surface, the second plate cam is laminated by fitting the concave portion and the convex portion and coupled. Thus, both of the plate cams are previously positioned at the predetermined relative positions which are away by the angle corresponding to the predetermined phase difference and integrated. Therefore, when the cam assembly is assembled by inserting the cam shaft into the shaft through-holes by pressure, the first and second plate cams can be positioned and held onto the cam shaft with the predetermined phase difference without a deviation, so that the assembling precision of the plate cams to the cam shaft can be fairly improved. Consequently, in a manner similar to that mentioned above, when the cam operates, a situation such that the abutting states of the cam surfaces to the follower such as a valve or the like become uneven or the contact positions are deviated can be eliminated. Operational precision can be improved. Durability of the cams can be improved.

### Brief Description of Drawings

Fig. 1 is a schematic plan view for explaining an arrangement construction of cam positioning tools equipped by a cam positioning apparatus according to the present invention.
Fig. 2 is a partial vertical sectional view showing a construction of the cam positioning tool.
Fig. 3 is an external view of the cam positioning tool.
Fig. 4 is a partial vertical sectional view of a gear assembling apparatus equipped by an assembling apparatus of a cam assembly.
Fig. 5(5A) is a front view of a plate cam and Fig. (5B) is a side sectional view thereof.
Fig. 6 is a perspective view of the cam assembly which is assembled by the assembling apparatus.
Fig. 7 is a perspective view showing a schematic construction of the assembling apparatus.
Fig. 8 is a front view showing first and second plate cams in a coupling state.
Fig. 9 is a vertical sectional view taken along the line X-X in Fig. 8.
Fig. 10 is a front view showing the first and second plate cams coupled by a coupling plate.
Fig. 11 is a vertical sectional view taken along the line Y-Y in Fig. 10.
Fig. 12 is a perspective view showing a conventional cam assembly obtained by assembling two plate cams of different phases onto a cam shaft.

### Best Mode for Carrying Out the Invention

An embodiment of the invention will be described hereinbelow with reference to the drawings.

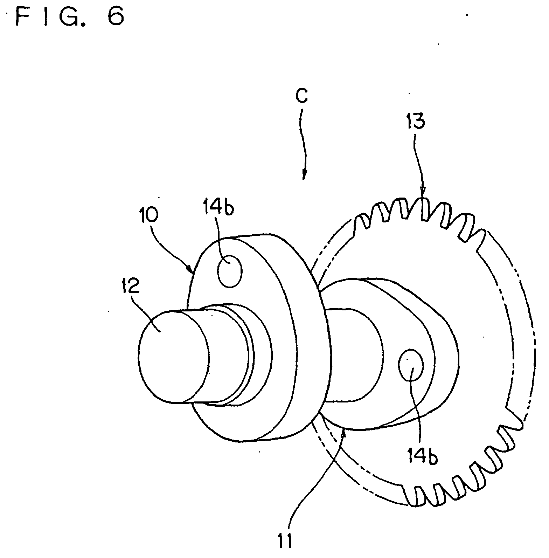

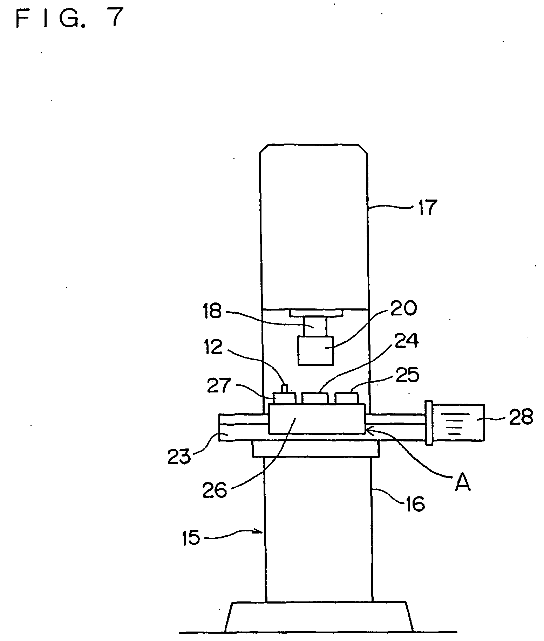

Fig. 7 shows an assembling apparatus having a cam positioning apparatus of the invention. This assembling apparatus is means for assembling, for example, a cam assembly C shown in Fig. 6 as a finished product.

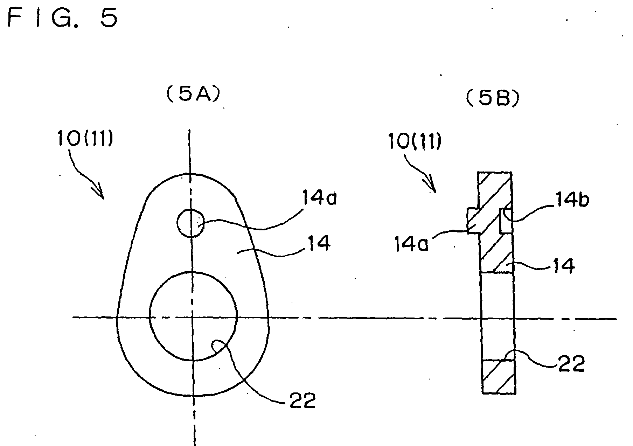

The cam assembly C is rotating means made of metal which is used in, for example, an internal combustion engine for a motorcycle and constructed in a manner such that first and second plate cams 10 and 11 are assembled onto a cam shaft 12 while deviating attaching phases in the circumferential direction of the cam shaft 12 by a predetermined angle and one gear 13 is similarly assembled onto the cam shaft 12. Particularly, the plate cams 10 and 11 are punched and formed by using, for example, a fine blanking method. Also shown in Figs. 5A and 5B, each plate cam is formed in an arc-cam-shape having an extending portion 14 which extends outwardly in one direction from a shaft through-hole 22. A cylindrical convex portion 14a is formed on one of plate surfaces and a cylindrical concave portion 14b is formed on the other plate surface at a position corresponding to the back side of the convex portion 14a. When the cam assembly is used, although not shown, a timing gear on a crank shaft which is rotated synchronously with an engine cycle is come into engagement with the gear 13, thereby rotating the cam shaft 12 and rotating the plate cams 10 and 11 in accordance with the rotation of the cam shaft 12. An on/off control of an exhaust valve or an intake valve corresponding to them is performed.

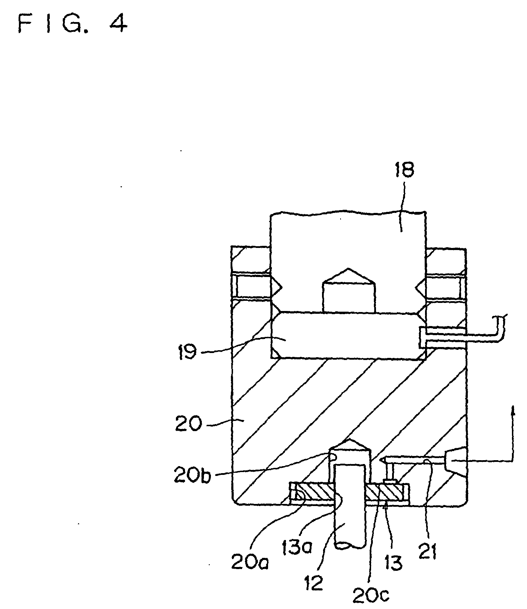

As shown in Fig. 7, the assembling apparatus of the cam assembly has an apparatus main body 15 having a tower-type construction. The apparatus main body 15 has an assembling base plate 16 on the lower side and has a gear assembling apparatus 17 on the upper side. The gear assembling apparatus 17 has a press (preferably, a hydraulic press) and, also as shown in Fig. 4, a gear positioning tool 20 is attached through a load cell 19 to a lower edge of a pressing ram 18 which hangs down from the press.

The gear positioning tool 20 has a short cylindrical shape and is constructed in a manner such that a disk-shaped positioning concave portion 20a having almost the same diameter as that of the gear 13 is formed in the center portion of the lower surface, and a shaft relief hole 20b is formed at the center of the positioning concave portion 20a. A seating surface 20c matched with a plate surface of the gear 13 is formed on the upper surface of the positioning concave portion 20a in Fig. 4. Although not shown, a positioning tooth portion with which a tooth portion of the gear 13 is come into engagement is formed in a part of an inner peripheral wall. An air passage 21 is formed in the positioning concave portion 20a. A vacuum device (not shown) such as a vacuum pump is connected to the air passage 21 through a coupling member (not shown).

As shown in Fig. 7, a horizontal guide board 23 is fixed on the upper side of the assembling base plate 16. A positioning base plate 26 is come into engagement with a guide rail provided on the horizontal guide board 23 and first and second cam positioning tools 24 and 25 are mounted on the positioning base plate 26, thereby constructing a cam positioning apparatus A of the invention. In the example shown in the diagram, according to the cam positioning apparatus A, a shaft holder 27 is arranged in parallel with the cam positioning tools 24 and 25 and fixed onto the same positioning base plate 26.

The shaft holder 27 is shaft positioning means for allowing the cam shaft 12 to stand in the vertical direction at the center and holding it. The horizontal guide board 23 has a driving motor 28 at an edge and is constructed in a manner such that the positioning base plate 26 is reciprocated to right and left in the diagram by the driving motor 28 and the cam positioning tools 24 and 25 and the shaft holder 27 are properly and selectively positioned at predetermined positions just under the gear positioning tool 20.

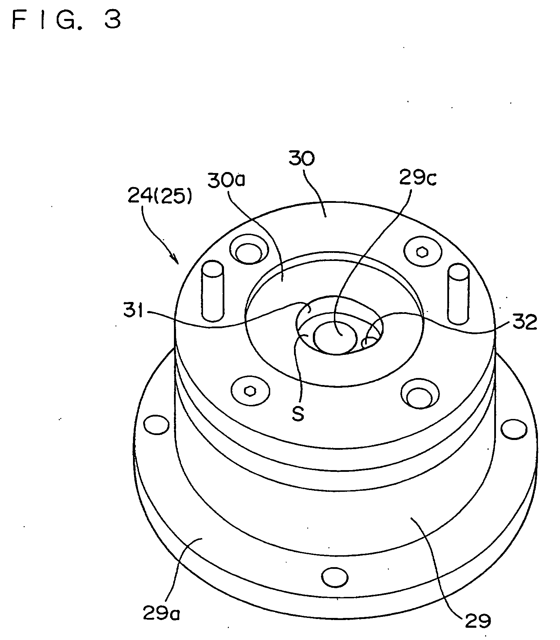

As shown in Fig. 3, each of the cam positioning tools 24 and 25 has a short cylindrical attaching base plate 29 having an annular flange portion 29a in the lower portion. A disk-shaped positioning template 30 is attached onto the attaching base plate 29. A circular concave portion 30a is formed in a center portion on the upper surface of the positioning template 30 and, further, a positioning hole 31 which penetrates through the circular concave portion 30a in the plate thickness direction is formed at the center thereof. The positioning hole 31 is formed so as to have almost the same shape as that of each of the plate cams 10 and 11 with the arc-cam-shape in a manner such that a seating surface S with an arc-cam-shape serving as a part of the upper surface of the attaching base plate 29 faces outside.

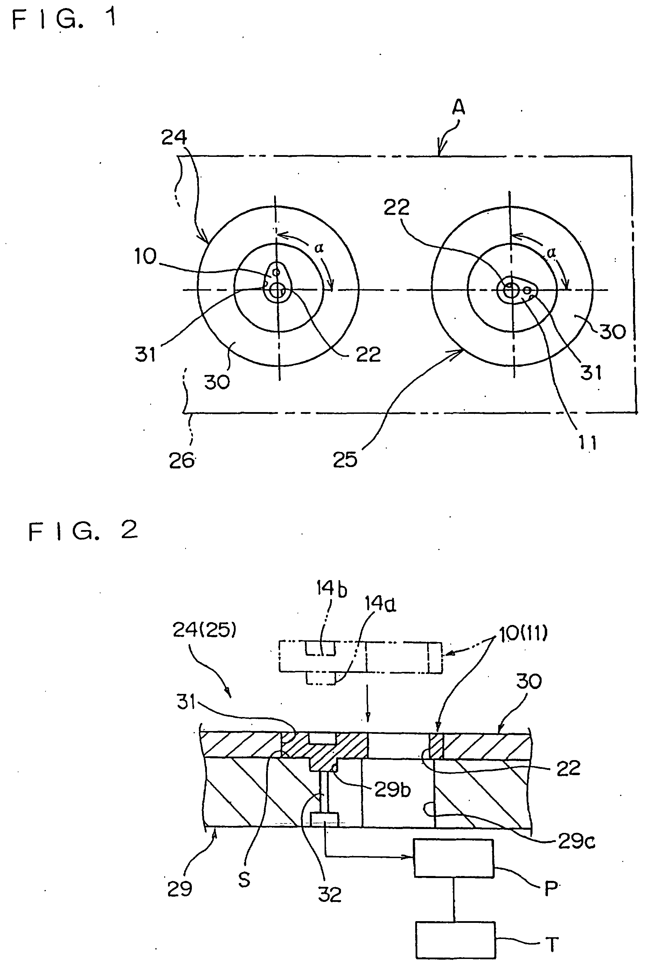

A shaft relief hole 29c which penetrates at a penetrating position of the cam shaft 12 under the positioning hole 31 is formed in the attaching base plate 29. An air passage 32 which penetrates at the concave and convex positions of the plate cams 10 and 11 beside the hole 29c is formed. The air passage 32 is constructed in a manner such that an upper edge opening portion at an entrance is formed in a slightly wide cylindrical shape in accordance with the shape of the convex portion 14a of each of the plate cams 10 and 11 as shown in Fig. 2, and a positioning engagement concave portion 29b is formed there.

In the cam positioning apparatus A, as shown in Fig. 1, the cam positioning tools 24 and 25 are fixed onto the positioning base plate 26 at attaching positions where the positioning holes 31 are arranged at relative positions which are deviated by a predetermined angle α in accordance with the phase difference of the plate cams 10 and 11.

Further, as shown in Fig. 2, the cam positioning tools 24 and 25 are constructed in a manner such that a lower edge opening of the air passage 32 is connected to a vacuum device P such as a vacuum pump through a coupling member (not shown), thereby enabling spaces between the positioning templates 30 and the plate cams 10 and 11 to be vacuum-sucked through the air passages 32. Each cam positioning tool has a vacuum degree detecting apparatus T such as a vacuum gauge, thereby enabling vacuum degrees in the spaces between the positioning templates 30 and the plate cams 10 and 11 to be detected when they are vacuum-sucked, respectively.

In case of assembling the cam assembly C by using the foregoing assembling apparatus, as shown in Fig. 4, the gear 13 is fitted and set into the positioning concave portion 20a. When the setting of the gear 13 is detected by, for example, a proper sensor (not shown), the vacuum device of the gear assembling apparatus 17 is made operative and air in a space between the positioning concave portion 20a and the gear 13 is sucked through the air passage 21. The gear 13 is adsorbed onto the seating surface 20c by a vacuum pressure of this moment and held lest it is dropped.

When the gear 13 is vacuum-sucked as mentioned above, the vacuum degree in this space is detected by, for example, a vacuum degree detecting apparatus (not shown) and an adhesion degree of the gear 13 of the positioning concave portion 20a to the seating surface 20c is checked from the detected vacuum degree. In this case, when a predetermined vacuum degree is obtained, the gear 13 is held as it is in the positioning concave portion 20a. When the predetermined vacuum degree is not obtained, the gear 13 is set to a predetermined position again by correcting an inclination or the like.

The cam shaft 12 is allowed to stand vertically by the shaft holder 27, positioned, and set. The plate cams 10 and 11 are positioned and held by the first and second cam positioning tools 24 and 25, respectively.

When the first plate cam 10 is positioned and held, as shown in Fig. 2, in a state where the convex portion 14a faces downward, the first plate cam 10 is inserted into the first positioning hole 31 of the positioning template 30 and the convex portion 14a is come into engagement with the positioning engagement concave portion 29b, put onto the seating surface S, and set.

Subsequently, when the setting of the first plate cam 10 is detected by, for example, a proper sensor (not shown), the vacuum device P is made operative, thereby sucking air in the space between the positioning template 30 and first plate cam 10 through the air passage 32. The plate cam 10 is adsorbed onto the seating surface S by a vacuum pressure of this moment and held. When the plate cam 10 is vacuum-sucked as mentioned above, a vacuum degree in the space between the positioning template 30 and first plate cam 10 is detected by the vacuum degree detecting apparatus T. An adhesion degree of the plate cam 10 to the seating surface S of the positioning template 30 is checked from the detected vacuum degree. In this case, if a predetermined vacuum degree is obtained, the plate cam 10 is held as it is in the positioning hole 31. If the predetermined vacuum degree is not obtained, the plate cam 10 is set again to a predetermined position by correcting the inclination or the like of the plate cam 10. In the invention, for example, the adhesion degree of the plate cam or the like to the seating surface of the positioning template can be also checked by a construction such that the compressed air is fed into spaces between the plate cam, the gear, and the positioning template and these spaces are set into a negative pressure state.

Also in case of positioning and holding the second plate cam 11, similarly, the plate cam 11 is inserted into the positioning hole 31 of the second cam positioning tool 25, put onto the seating surface S, and vacuum-sucked by the vacuum device P. An adhesion degree of the plate cam 11 to the seating surface S of the positioning template 30 is checked from the detected vacuum degree and, thereafter, the plate cam 11 is set. In the cam positioning apparatus A according to the invention, consequently, the first and second plate cams 10 and 11 are positioned and held at relative positions where their attaching phases are deviated in the circumferential direction of the angle α as shown in Fig. 1 in accordance with the predetermined phase difference on the cam shaft 12.

After the gear 13, cam shaft 12, and plate cams 10 and 11 are positioned and held, respectively, the driving motor 28 is made operative to thereby move the positioning base plate 26. First, the shaft holder 27 is guided to an assembling position just under the gear positioning tool 20. The cam shaft 12 is matched with the center of the shaft relief hole 20b of the gear 13.

Subsequently, the hydraulic press of the gear assembling apparatus 17 is made operative, thereby allowing the pressing ram 18 to descend from a standby position shown in Fig. 7 by a predetermined distance. As shown in Fig. 4, the cam shaft 12 is inserted into a shaft through-hole 13a of the gear 13 by pressure, thereby assembling the gear 13 to a predetermined length position on the cam shaft 12.

After that, the pressing ram 18 is returned to the standby position and the positioning base plate 26 is moved again. The first cam positioning tool 24 is guided to an assembling position just under the gear positioning tool 20. The cam shaft 12 is matched with the center of the shaft through-hole 22 of the first plate cam 10.

The pressing ram 18 is allowed to descend again by a predetermined distance. The cam shaft 12 is inserted into the shaft through-hole 22 of the first plate cam 10 by pressure, thereby assembling the plate cam 10 to a predetermined length position on the cam shaft 12. Also with respect to the second plate cam 11, in a manner similar to the above, the cam shaft 12 is inserted at the assembling position just under the gear positioning tool 20 by pressure. Thus, at a predetermined length position on the cam shaft 12, the second plate cam 11 is assembled to a predetermined angle position which is deviated in the circumferential direction by the angle α from the first plate cam 10.

Although each of the plate cams 10 and 11 mentioned above is the cam having the convex portion 14a and the concave portion 14b on both plate surfaces, the invention also incorporates a case of using flat plate cams without such concave and convex portions on the plate surfaces.

The example in which the first and second plate cams 10 and 11 are positioned by using the first and second cam positioning tools 24 and 25 while shifting the attaching phases in the circumferential direction of the cam shaft 12 by the predetermined angle α has been shown above. However, according to the invention, in the cam assembly C, by constructing the first and second plate cams 10 and 11 as follows, they can be also positioned to relative positions which are away by the predetermined phase difference α.

In the embodiment shown in the diagrams, a construction of the second plate cam 11 will be first described. The plate cam 11 is punched and formed by using, for example, the fine blanking method. In a manner similar to that of the cam shown in Figs. 5A and 5B, the cam 11 is formed in an arc-cam-shape having the extending portion 14 which extends outwardly in one direction from the shaft through-hole 22. The convex portion1 14a is formed on one plate surface and the concave portion 14b is formed on the other plate surface at a position corresponding to the back side of the convex portion 14a.

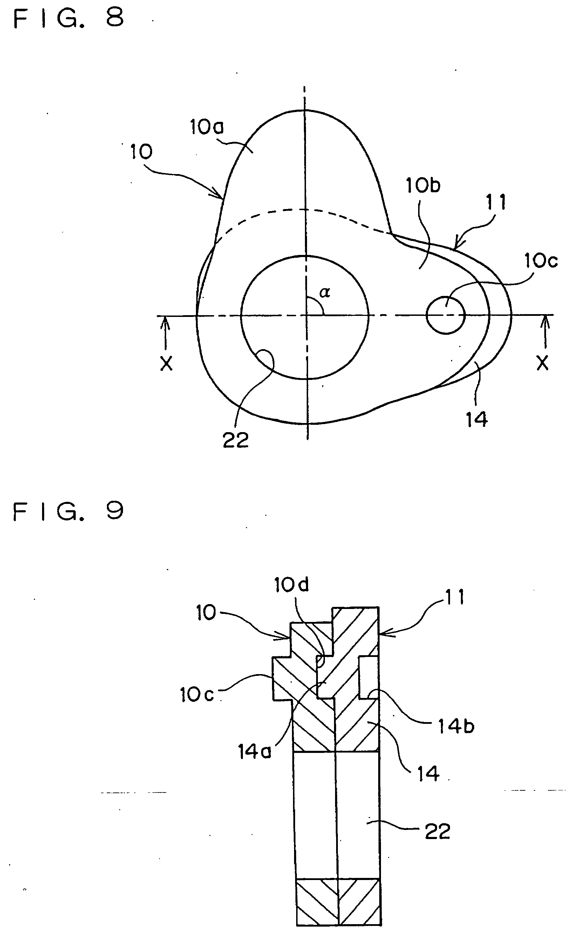

Although the first plate cam 10 is punched and formed in a manner similar to the second plate cam 11, for example, as shown in Figs. 8 and 9, the cam 10 comprises: an arc-cam-shaped cam main body portion 10a in which the shaft through-hole 22 is formed; and a similar plate-shaped coupling projecting portion 10b which laterally extends from the shaft through-hole 22.

The coupling projecting portion 10b is formed in a manner such that a length of projecting portion is slightly shorter than that of the second plate cam 11 and an outer edge is formed in a round shape in accordance with the outer shape of the extending portion 14. Moreover, at a position which is away from the attaching phase of the first plate cam 10 by an angle corresponding to the phase difference (angle α) between the first and second plate cams 10 and 11, a convex portion 10c is formed on one of plate surfaces of the coupling projecting portion 10b and a concave portion 10d is formed on the other plate surface at a position corresponding to the back side of the convex portion 10c.

The first and second plate cams 10 and 11 are laminated by the coupling projecting portion 10b, coupled by fitting the concave portion 10d and convex portion 14a, and integrated. Thus, both of the plate cams 10 and 11 are restricted by the fitting of the concave portion 10d and convex portion 14a and positioned at predetermined attaching positions which are away by the angle corresponding to the phase difference α.

Therefore, in the example shown in the diagrams, upon assembling of the cam assembly C, although not shown, for example, after the cam shaft 12 was inserted by pressure and the gear 13 was assembled, the integrated cams 10 and 11 with the above construction are positioned and held by using the proper positioning tools and the cam shaft 12 is inserted into the shaft through-hole 22 by pressure. Thus, the plate cams 10 and 11 are assembled onto the cam shaft 12 at the predetermined relative positions where the attaching phases are deviated by the predetermined angle α.

In the example shown in the diagrams, a deformed cam shape such that the coupling projecting portion 10b is formed on the side of the first plate cam 10 and the concave portion 10d and convex portion 10c are formed there is constructed with respect to the second plate cam 11. In the invention, however, a similar deformed cam shape can be also formed on the side of the second plate cam 11 with respect to the first plate cam 10.

According to the invention, by constructing the cam assembly C as follows, the first and second plate cams 10 and 11 can be also positioned at the attaching positions which are away by the predetermined phase difference α.

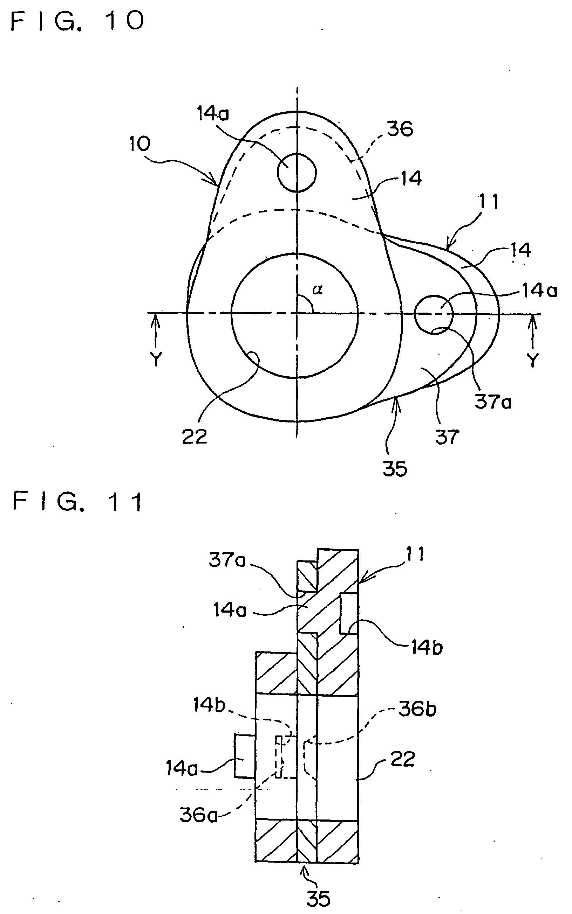

In the embodiment shown in the diagrams, in the cam assembly C, the first and second plate cams 10 and 11 are punched and formed by using the fine blanking method in the arc-cam-shape in a manner similar to that shown in Figs. 5A and 5B. The convex portion 14a is formed on one of the plate surfaces and the concave portion 14b is formed on the other plate surface at the position corresponding to the back side of the convex portion 14a. Further, a coupling plate 35 is arranged between the plate cams 10 and 11 as shown in Figs. 10 and 11 and both of the plate cams 10 and 11 are integratedly coupled by the coupling plate 35.

The coupling plate 35 is similarly punched and formed by using the fine blanking method. The same shaft through-holes 22 as those of the first and second plate cams 10 and 11 are formed in the coupling plate 35. Plate portions 36 and 37 which are branched from the shaft through-hole 22 and extend outwardly are provided for the coupling plate 35.

The plate portions 36 and 37 are constructed in a manner such that lengths of projecting portions are slightly shorter than the first and second plate cams 10 and 11 and outer edges are formed in a round shape in accordance with the outer shape of the extending portion 14. Further, the plate portions 36 and 37 are formed with, for example, a convex portion 36a and a hole-shaped concave portion 37a at relative positions which are away by an angle corresponding to the phase difference α between both of the plate cams 10 and 11. A concave portion 36b is formed on the other plate surface at a position corresponding to the back side of the convex portion 36a.

According to the coupling plate 35 with the above construction, in the plate portion 36, the first plate cam 10 is laminated by fitting the convex portion 36a and concave portion 14b, in the other plate portion 37, the second plate cam 11 is laminated by fitting the concave portion 37a and convex portion 14a, and both of the plate cams 10 and 11 are coupled by the coupling plate 35 and integrated. Thus, both plate cams 10 and 11 are restricted by the fitting of the concave and convex portions by the coupling plate 35 and positioned at the predetermined attaching positions which are deviated by the angle corresponding to the phase difference α.

Therefore, in the example shown in the diagrams, upon assembling of the cam assembly C, in a manner similar to that mentioned above, after the cam shaft 12 was inserted by pressure and the gear 13 was assembled, by inserting the cam shaft 12 into the shaft through-hole 22 by pressure, the integrated cams 10 and 11 with the above construction are assembled onto the cam shaft 12 at the predetermined relative positions where the attaching phases are deviated by the predetermined angle α.

Although each of the concave and convex portions 14b and 14a and the like has the cylindrical shape, they can be also formed in another proper shape such as a prism shape or the like.

Although the example of assembling the cam assembly C which is used in the internal combustion engine for the motorcycle or the like has been shown above, the invention can be naturally and widely applied to a case of assembling a cam assembly which is used in a field other than the internal combustion engine. Although the example of using two plate cams has been shown here, the invention can be also applied to a case of using three or more plate cams.

### Industrial Applicability

As mentioned above, the invention is useful as a cam assembly made of metal which is used in various internal combustion engines of a motorcycle and the like, is useful as a cam positioning apparatus for positioning the plate cams provided for the cam assembly in a state where the attaching phases are deviated, is further useful as a cam assembly which is used in engines other than the internal combustion engine, and is also useful as a cam positioning apparatus for positioning the plate cams of the cam assembly in a state where the attaching phases are deviated.

### Statement under Art. 19.1 PCT

Claim 1 clarifies that the cam positioning apparatus is provided with the vacuum devices and the vacuum degree detecting apparatuses which are not disclosed in the cited references.
   According to the present invention, when the first and second plate cams are fitted into the positioning holes, respectively, the adhesion degrees of the plate cams to the seating surfaces are confirmed by using the vacuum devices and the vacuum degree detecting apparatuses, thereby obtaining an effect such that the plate cams can be certainly positioned without a positional deviation.
Claim 2 clarifies that in order to further raise the effect according to amended Claim 1, as for the first and second plate cams, the concave and convex portions are formed on the front and back sides of the plate surfaces of those plate cams, the engaging concave portions with which the convex portions are come into engagement are particularly formed on the seating surfaces in the positioning holes, and the engaging concave portions are communicated at their lower surfaces with the air passages communicated with the vacuum pump.

## Claims

1. A cam positioning apparatus for positioning and holding first and second plate cams made of metal while deviating attaching phases in a circumferential direction of a cam shaft by a predetermined angle when a cam assembly is assembled by inserting said cam shaft by pressure into shaft through-holes formed in said first and second plate cams, comprising:
a first cam positioning tool which forms a positioning hole that has almost the same shape as an outer shape of said first plate cam and in that a seating surface of said first plate cam is formed on a bottom portion and, when said first plate cam is positioned and held, fits the first plate cam into said positioning hole, and puts the first plate cam onto said seating surface;
a second cam positioning tool which forms a positioning hole that has almost the same shape as an outer shape of said second plate cam and in that a seating surface of said second plate cam is formed on a bottom portion and, when said second plate cam is positioned and held, fits the second plate cam into said positioning hole, and puts the second plate cam onto said seating surface; and
a positioning base plate which arranges said first and second positioning holes to relative positions which are deviated by said predetermined angle in accordance with the phase difference between said first and second plate cams and fixes the first and second cam positioning tools.

2. A cam positioning apparatus according to claim 1, further comprising:
vacuum devices which suck air existing in spaces between said positioning holes and said plate cams fitted in said positioning holes from lower portions of said seating surfaces through air passages, respectively; and
vacuum degree detecting apparatuses which detect vacuum degrees in the spaces between said positioning holes and said plate cams and confirm adhesion degrees of said plate cams to said seating surfaces from said detected vacuum degrees, respectively.

3. A cam assembly formed by inserting a cam shaft by pressure into shaft through-holes formed in first and second plate cams made of metal and coaxially assembling said first and second plate cams while deviating attaching phases in a circumferential direction of said cam shaft by a predetermined angle, wherein:
a convex portion is formed on one of plate surfaces of each of the first and second plate cams and a concave portion is formed on the other plate surface at a position corresponding to a back side of said convex portion;
said convex and concave portions are formed on one of said plate cams at positions which are away from the attaching phase of said plate cam by an angle corresponding to a phase difference between said plate cam and the other plate cam; and
both of said plate cams are coupled and integrated by fitting said concave and convex portions.

4. A cam assembly formed by inserting a cam shaft by pressure into shaft through-holes formed in first and second plate cams made of metal and coaxially assembling said first and second plate cams while deviating attaching phases in a circumferential direction of said cam shaft by a predetermined angle, wherein:
said cam assembly has a coupling plate which couples said first and second plate cams;
a convex portion is formed on one of plate surfaces of each of the first and second plate cams and a concave portion is formed on the other plate surface at a position corresponding to a back side of said convex portion;
a convex portion and concave portions which are fitted into/onto said convex and concave portions of both of said plate cams are formed on said coupling plate at relative positions which are away by an angle according to a phase difference between both of said plate cams, respectively; and
both of said plate cams are laminated and integrated by fitting said concave and convex portions through said coupling plates.

## Amended claims

### Amended claims under Art. 19.1 PCT

**1.** (AMENDED) A cam positioning apparatus for positioning and holding first and second plate cams made of metal while deviating attaching phases in a circumferential direction of a cam shaft by a predetermined angle when a cam assembly is assembled by inserting said cam shaft by pressure into shaft through-holes formed in said first and second plate cams, comprising:
a first cam positioning tool which forms a positioning hole that has almost the same shape as an outer shape of said first plate cam and in that a seating surface of said first plate cam is formed on a bottom portion and, when said first plate cam is positioned and held, fits the first plate cam into said positioning hole, and puts the first plate cam onto said seating surface;
a second cam positioning tool which forms a positioning hole that has almost the same shape as an outer shape of said second plate cam and in that a seating surface of said second plate cam is formed on a bottom portion and, when said second plate cam is positioned and held, fits the second plate cam into said positioning hole, and puts the second plate cam onto said seating surface;
a positioning base plate which arranges said first and second positioning holes to relative positions which are deviated by said predetermined angle in accordance with the phase difference between said first and second plate cams and fixes the first and second cam positioning tools;
vacuum devices which suck air existing in spaces between said positioning holes and said plate cams fitted in said positioning holes from lower portions of said seating surfaces through air passages, respectively; and
vacuum degree detecting apparatuses which detect vacuum degrees in the spaces between said positioning holes and said plate cams and confirm adhesion degrees of said plate cams to said seating surfaces from said detected vacuum degrees, respectively.

**2.** (AMENDED) A cam positioning apparatus according to claim 1, wherein said first and second plate cams are formed in a manner such that a convex portion is formed on one of plate surfaces of each of said plate cams and a concave portion is formed on the other plate surface at a position corresponding to the back side of said convex portion, engaging concave portions with which said convex portions of said first and second plate cams are respectively come into contact are formed on said seating surfaces of said positioning holes into which -said first and second plate cams are fitted, and said engaging concave portions are formed so as to be communicated at their lower surfaces with said air passages.

**3.** A cam assembly formed by inserting a cam shaft
